# EUROPEAN PATENT APPLICATION

(11) **EP 2 426 967 A1**
(43) Date of publication of application: **07.03.2012**
(21) Application number: 09842500.2
(22) Date of filing: 03.04.2009
(51) Int. Cl.: H04W 12/02

(54) **METHOD, SYSTEM AND MOBILE SWITCH CENTER FOR LEGAL LISTENING**

(71) Applicant: Huawei Technologies Co., Ltd., Shenzhen, Guangdong 518129 (CN)
(72) Inventor: LIU, Jun, Shenzhen Guangdong 518129 (CN); WANG, Zhixi, Shenzhen Guangdong 518129 (CN); ZHU, Xing, Shenzhen Guangdong 518129 (CN); QIN, Jun, Shenzhen Guangdong 518129 (CN)
(74) Representative: Barth, Stephan Manuel
(86) International application number: PCT/CN2009/071166
(87) International publication number: WO 2010/111843

(57) **Abstract**

A method, a system, and a Mobile Switch Center, MSC, for lawful interception are disclosed by the embodiments of the present invention. The method for lawful interception includes: when a local switch of a speech path between a first terminal and a second terminal is established in a Base Station Sub-system, BSS, or after the local switch of the speech path between the first terminal and the second terminal is established in the BSS, instructing the BSS to output a bypassing to the MSC to perform lawful interception about the speech path. Through the method, the system, and the MSC for lawful interception in the present invention, the speech path between two terminals is connected to the MSC from the BSS, so that the bypassing is led out from the MSC for an interception system to perform lawful interception. The method will not cause speech interruption on the speech path between the two terminals that has a local switch established, or may greatly shorten the time of speech interruption, so that a user that is monitored cannot be easily aware that the speech path is monitored.

## Description

### FIELD OF THE INVENTION

The present invention relates to the field of mobile communications technologies, and particularly to a method, a system, and a mobile switch center for lawful interception.

### BACKGROUND OF THE INVENTION

In an existing communication system, a mobile switch center (Mobile Switch Center, MSC) in a core network (Core Network, CN) generally connects a speech path of a session between two communication terminals, that is, for a call, a user plane link and a control plane link from the terminals to the MSC through a base station subsystem (Base Station Sub-system, BSS) need to be established. The transmission network is an important part of a mobile communication network, especially an important part of a global system for mobile communication (Global System for Mobile communication, GSM).

Currently, as for operators in many countries and regions, deployment, operation, and business development of wireless network are affected due to a bottleneck problem of transmission resources in a radio access network (mainly including a BSS) and a core network s. In the preceding scenario, the operators generally adopt the method of microwave, a satellite, or a terrestrial leased line to solve the bottleneck problem of the transmission resources. By adopting a proper technical solution, the occupied transmission network bandwidth may be reduced, which helps the operators to reduce the construction cost and operation cost of a radio network. Local switch of the user plane link in the BSS is an effective method for reducing the occupied transmission resource, where the local switch in the BSS refers to that the speech path of the two communication terminals is looped back in the BSS. A basic scheme of the local switch is that the control plane link of the call is still connected to the MSC in the CN for control, and, the user plane link of the call is directly looped back in the BSS.

Lawful interception refers to activities that the department of state security monitors telecommunication services to the extent permitted by law. Any interception activities should be authorized by relevant state departments. According to the requirements of the department of state security, all the mobile communication networks that are operated, including the GSM, the code division multiple access (Code Division Multiple Access, CDMA) communication network and the wide code division multiple access (Wide Code Division Multiple Access, W-CDMA) communication network in the future, are required to enable the department of state security to monitor a target user equipment and provide an interception interface for implementing interception. An interception system of the department of state security accesses the mobile communication network through the interception interface to implement the interception on the target user equipment, where the target user equipment refers to a communication terminal that is monitored.

In existing interception technique standards, services that may be monitored include a call service, a fax service, an asynchronous data service, a short message service, and a supplementary service. In the GSM and CDMA communication networks, a device that is required to provide an interception access function includes a home location register (HLR, Home Location Register), a mobile switch center (MSC, Mobile Switch Center), and a short message center (SMC, Short Message Center). As for the call service, the interception of all the speech paths of the call is provided by the MSC for the interception system.

However, when the local switch of the user plane link is performed in the BSS, the speech path does not pass through the MSC, so the local switch in the BSS and the lawful interception of the service cannot be implemented at the same time.

### SUMMARY OF THE INVENTION

Embodiments of the present invention provide a method, a system, and a mobile switch center for lawful interception, so as to implement lawful interception about a speech path between terminals.

An embodiment of the present invention provides a method for lawful interception, where the method includes the following steps.

When a local switch of a speech path between a first terminal and a second terminal is established in a base station sub-system, BSS, or after the local switch of the speech path between the first terminal and the second terminal is established in the BSS, the BSS is instructed to output a bypassing to a mobile switch center to perform lawful interception about the speech path.

An embodiment of the present invention further provides a mobile switch center, MSC, for lawful interception, where the MSC is configured to instruct a BSS to output a bypassing to the mobile switch center, MSC, to perform lawful interception about a speech path when a local switch of the speech path between a first terminal and a second terminal is established in the base station sub-system, BSS, or after the local switch of the speech path between a first terminal and a second terminal is established in the BSS.

An embodiment of the present invention further provides a system for lawful interception, where the system includes a mobile switch center, MSC, a base station sub-system, BSS, and an interception system, where,

The MSC is configured to instruct the BSS to output a bypassing to the mobile switch center, MSC, when a local switch of a speech path between a first terminal and a second terminal is established in the base station sub-system, BSS, or after the local switch of the speech path between the first terminal and the second terminal is established in the BSS.

The BSS is configured to perform bypassing operation, output the bypassing to the MSC, so as to connect the speech path established between the terminals to the MSC.

The MSC is further configured to lead out a speech from the bypassing connected to the MSC to the interception system.

The interception system is configured to perform lawful interception about the speech path through the speech led out from the MSC.

It can be known from the preceding technical solutions, in the method, the system, and the mobile switch center for lawful interception in the embodiments of the present invention, the speech path between two terminals is connected to the MSC from the BSS, so that the bypassing is led out from the MSC for the interception system to perform lawful interception. The method will not cause speech interruption on the speech path between the two terminals that has a local switch established, or may greatly shorten the time of speech interruption, so that a user that is monitored cannot be easily aware that the speech path is monitored.

### BRIEF DESCRIPTION OF THE DRAWINGS

FIG. 1 is a schematic structural diagram of a network where lawful interception is implemented when a switch of a user plane link is established in an MSC according to the present invention;

FIG. 2 is a schematic structural diagram of a network where lawful interception cannot be implemented when a local switch of a user plane link is established in a BSS according to the present invention;

FIG. 3 is a signaling flow chart of an embodiment of a method for lawful interception according to the present invention;

FIG. 4 is a schematic diagram of a speech path of an embodiment of a method for lawful interception according to the present invention;

FIG. 5A is a signaling flow chart of another embodiment of a method for lawful interception according to the present invention;

FIG. 5B is another signaling flow chart of another embodiment of a method for lawful interception according to the present invention;

FIG. 6 is a signaling flow chart of further another embodiment of a method for lawful interception according to the present invention;

FIG. 7 is a signaling flow chart of still another embodiment of a method for lawful interception according to the present invention;

FIG. 8 is a schematic structural diagram of an embodiment of an MSC for lawful interception according to the present invention;

FIG. 9 is a schematic structural diagram of another embodiment of an MSC for lawful interception according to the present invention;

FIG. 10 is a schematic structural diagram of further another embodiment of an MSC for lawful interception according to the present invention;

FIG. 11 is a schematic structural diagram of still another embodiment of an MSC for lawful interception according to the present invention;

FIG. 12 is a schematic structural diagram of still another embodiment of an MSC for lawful interception according to the present invention; and

FIG. 13 is a schematic structural diagram of an embodiment of a system for lawful interception according to the present invention.

### DETAILED DESCRIPTION OF THE EMBODIMENTS

The technical solutions of the present invention are clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative effects shall fall within the protection scope of the present invention.

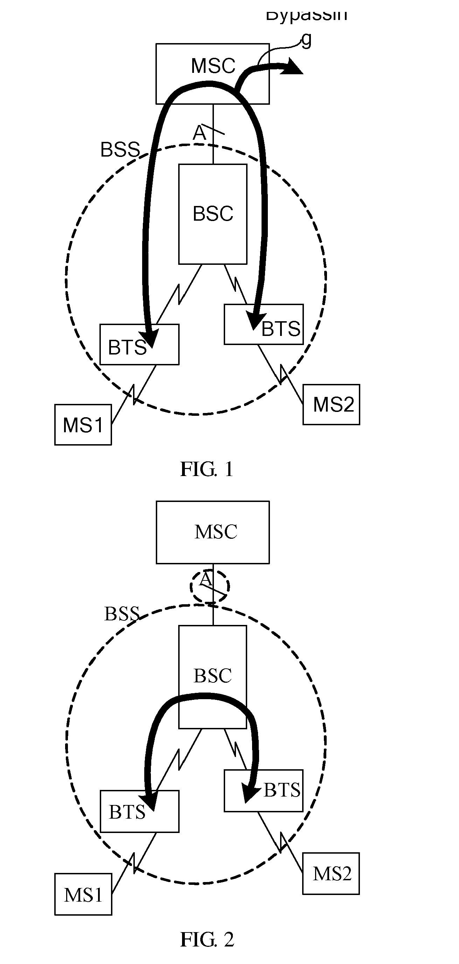

FIG. 1 is a schematic structural diagram of a network where lawful interception is implemented when a switch of a user plane link is established in an MSC. As shown in FIG. 1, a user plane link, that is, a speech path between two terminals MS1 and MS2, is connected to the MSC and is looped in the MSC, lawful interception of a certain terminal or two terminals may be implemented as long as a bypassing is led out from the MSC to an interception system. FIG. 2 is a schematic structural diagram of a network where lawful interception cannot be implemented when a local switch of a user plane link is established in a BSS. As shown in FIG. 2, a user plane link, that is, a speech path between two terminals MS1 and MS2, is looped in the BSS, where the BSS mainly includes a BSC and a BTS. The loop in the BSS may be that a speech path between two terminals in the same BSC is looped in the BSC or that a speech path between two terminals in the same BTS (cluster) is looped in the BTS (cluster). The scenario as shown in FIG. 2 is the loop in the BSC. In the local switch as shown in FIG. 2, the speech path between the two terminals MS1 and MS2 does not need to be connected to the MSC, and therefore A-interface resources between the BSS and the MSC are saved; however, a link for lawful interception cannot be led out from the MSC at this time. The following embodiments of the present invention specifically describe the technical solutions of how to perform lawful interception about a speech path between terminals in the scenario that two terminals perform local switch in a BSS. It should be noted that, as for the local switch of the speech path between the terminals established in the BSS mentioned in the embodiments of the present invention, local switch within the BSC and local switch within the BTS are not distinguished.

The technical solutions adopted in the embodiment of the present invention are: when the local switch of the speech path between the terminals is established in the BSS or after the local switch of the speech path between the terminals is established, instructing the BSS to output a bypassing to the MSC to perform lawful interception about the speech path between the terminals; or, after the local switch of the speech path between the terminals is established in the BSS, releasing the local switch, and establishing a speech path for the terminals with the MSC, looping the speech path through the MSC and leading out a bypassing from the MSC to serve as an output of lawful interception about the speech path.

Referring to FIG. 1 and FIG. 2, after the local switch of the speech path between the terminals is established in the BSS, the releasing the local switch, and establishing the speech path with the MSC for the terminals, looping the speech path through the MSC and leading out the bypassing from the MSC to serve as the output of lawful interception about the speech path is specifically: instructing, by the MSC, the BSS to release the local switch of the speech path between the two terminals, establishing a user plane link on A-interfaces of the two terminals and connecting the user plane link to the MSC. In this way, the speech path between the two terminals is connected to the MSC and is looped in the MSC, so as to lead out a bypassing from the MSC to serve as the output of lawful interception about the speech path for the interception system to perform lawful interception about the speech path between the terminals. Thereafter, if it needs to release the lawful interception performed by interception system on the speech path between the terminals, the MSC may directly release the lawful interception, that is, the MSC cancels the bypassing output to the interception system without the assistance of the BSS.

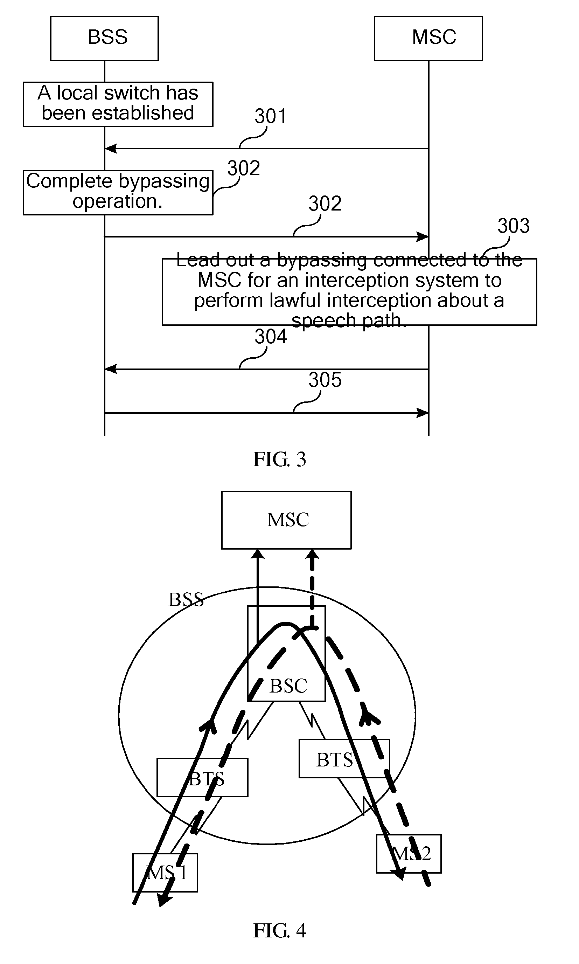

FIG. 3 is a signaling flow chart of an embodiment of a method for lawful interception according to the present invention. This embodiment is implemented in the scenario as follows: a local switch of the speech path between two terminals in the same session, that is, a first terminal and a second terminal, is established in a BSS. As shown in FIG. 3, the method includes the following steps.

Step 301: Corresponding to the terminal required to be monitored by the interception system, an MSC sends to the BSS a command of performing bypassing operation on the speech path of the established local switch.

FIG. 4 is a schematic diagram of a speech path of an embodiment of a method for lawful interception according to the present invention. As shown in FIG. 4, an interception system may require monitoring a speech path from one terminal MS1 to another terminal MS2, or a speech path from MS2 to MS1, or the speech paths in both directions. At this time, the MSC sends to the BSS a command of performing bypassing operation on the two speech paths that are between the two terminals and have the local switch established or performing bypassing operation on one of the two speech paths.

Step 302: The BSS returns a bypassing operation completion response message to the MSC after outputting, to the MSC, the bypassing of the speech path of the established local switch.

The BSS outputs the bypassing of the speech path between the two terminals to the MSC and returns the bypassing operation completion response message to the MSC, so that the MSC may obtain the speech of conversion between the two terminals.

Step 303: The MSC receives the bypassing operation completion response message returned by the BSS, and leads out the bypassing connected to the MSC for the interception system to perform lawful interception about the speech path.

Through the method for lawful interception provided in this embodiment, the bypassing of the speech path between two terminals is output to the MSC from the BSS, and therefore the speech is led out from the MSC for the interception system to perform lawful interception. The method will not cause speech interruption on the speech path between the two terminals that has a local switch established, or may greatly shorten the time of the speech interruption, so that a user that is monitored cannot be easily aware that the speech path is monitored.

Furthermore, in the process of maintaining the local switch, the BSS performs bypassing operation and outputs the bypassing of the speech path to the MSC, and the MSC outputs the speech to the interception system for lawful interception. When the interception system no longer needs to perform the lawful interception, the MSC may instruct the BSS to release the bypassing output of the terminal speech, and the BSS releases the bypassing output which is from the speech path between the two terminals to the MSC, as shown in FIG. 3. If it is required to terminate the lawful interception, after step 303, the method may further include the following steps.

Step 304: The MSC sends a bypassing release operation command to the BSS.

Step 305: The BSS releases the bypassing connected to the MSC after receiving the bypassing release operation command, and returns a bypassing release completion message to the MSC.

The process of releasing the bypassing connected to the MSC is applicable in the following embodiments that a bypassing is established to connect the speech path between two terminals to the MSC, so as to implement the termination operation on the lawful interception.

In the embodiment of the present invention, messages between the MSC and the BSS are transmitted on a call-related dedicated signaling connection control cart (Signaling Connection Control Part, SCCP) link.

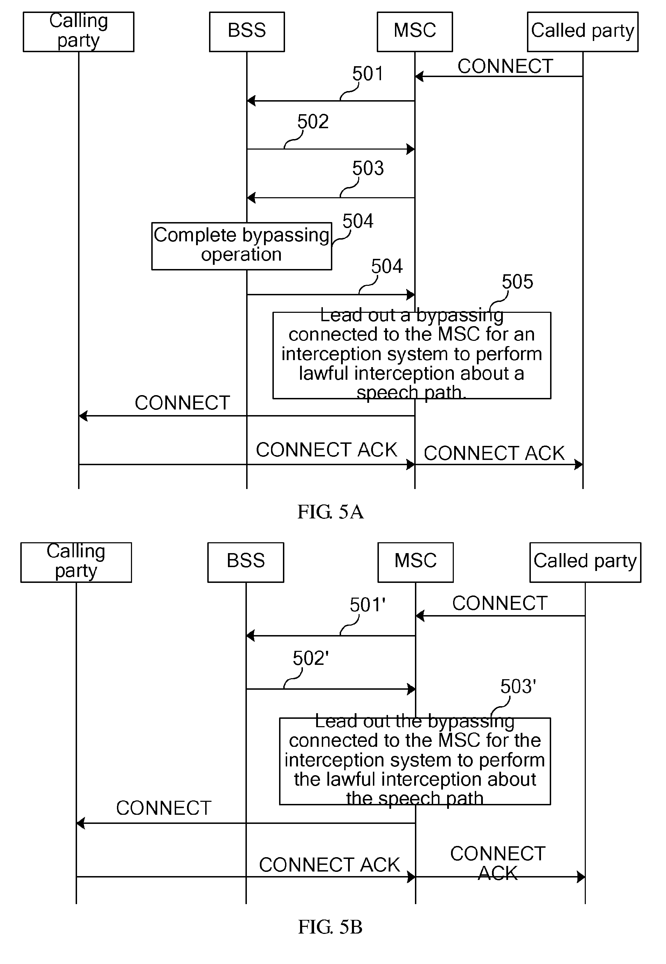

FIG. 5A is a signaling flow chart of another embodiment of a method for lawful interception according to the present invention. This embodiment is implemented in the scenario as follows: calls between two terminals in the same session are in the same BSS and have the same code or compatible codes, and a local switch of a speech path between the two terminals can be established but is not yet established. As shown in FIG. 5A, the method includes the following steps.

Step 501: An MSC sends to a BSS a command of establishing a local switch of the speech path between a first terminal and a second terminal.

In the process of establishing a call between the two terminals, the MSC judges that a local switch may be established between a calling terminal and a called terminal, and sends to the BSS a command of establishing a local switch between the two terminals after receiving a connection request message sent by the called terminal.

Step 502: The BSS returns a local switch completion response message to the MSC after the BSS completes the establishment of the local switch.

Step 503: Corresponding to the terminal required to be monitored by the interception system, the MSC sends to the BSS a command of performing bypassing operation on the speech path of the established local switch, after receiving the local switch completion response message returned by BSS.

The command of performing the bypassing operation may optionally carry endpoint resource information prepared by the MSC for the bypassing.

Step 504: The BSS returns a bypassing operation completion response message to the MSC after outputting to the MSC a bypassing of the speech path of the established local switch.

The bypassing operation completion response message may optionally carry endpoint resource information allocated by the BSS for the bypassing.

Step 505: The MSC receives the bypassing operation completion response message returned by the BSS, and leads out the bypassing connected to the MSC for the interception system to perform lawful interception about the speech path.

In step 505, after receiving the bypassing operation completion response message returned by the BSS, the MSC sends to the calling terminal the connection request message sent to the MSC by the called terminal; after receiving the connection request message, the calling terminal returns a connection response message to the MSC; and the MSC sends to the called terminal the received connection response message sent by the calling terminal. In this way, the establishment of the call between the two terminals is completed, and in the meanwhile, the bypassing operation for lawful interception performed by the interception system about the speech path is completed.

According to the implementation process of the lawful interception described in step 501 to step 505, a signaling message of the establishment of the local switch and a signaling message of the bypassing operation are sent in different messages. In the signaling process described below, the signaling message of the establishment of the local switch and the signaling message of the bypassing operation are sent in the same message. FIG. 5B is another signaling flow chart of another embodiment of a method for lawful interception according to the present invention. As shown in FIG. 5B, the method includes the following steps.

Step 501': An MSC sends to a BSS a command of establishing a local switch of a speech path between a first terminal and a second terminal and performing bypassing operation on the speech path in the local switch.

The command of performing the bypassing operation may optionally carry endpoint resource information prepared by the MSC for the bypassing.

In the process of establishing a call between the two terminals, the MSC judges that a local switch may be established between the calling terminal and the called terminal, and sends to the BSS a command of establishing a local switch between the two terminals and performing the bypassing operation on the speech path in the local switch, after receiving a connection request message sent by the called terminal.

Step 502': The BSS completes the establishment of the local switch and outputs a bypassing of the speech path of the established local switch, and returns a local switch and bypassing operation completion response message to the MSC.

The local switch and bypassing operation completion response message may optionally carry endpoint resource information allocated by the BSS for the bypassing.

Step 503': The MSC receives the local switch and bypassing operation completion response message returned by the BSS, and leads out the bypassing connected to the MSC for the interception system to perform lawful interception about the speech path.

In step 503', after receiving the local switch and bypassing operation completion response message returned by the BSS, the MSC sends to the calling terminal a connection request message sent to the MSC by the called terminal; after receiving the connection request message, the calling terminal returns a connection response message to the MSC; and the MSC sends to the called terminal the received connection response message sent by the calling terminal. In this way, the establishment of the call between the two terminals is completed, and in the meanwhile, the bypassing operation for lawful interception about the speech path performed by the interception system is completed.

In this embodiment, the message of the establishment of the local switch and the message of the bypassing operation may be combined into one message for delivery, or may be sent to the BSS as two messages. Delivery in one combined message may reduce the time relay of operation and accelerate the establishment of lawful interception, so that the user that is monitored cannot easily aware that the speech path is interrupted.

If the first terminal after handover can establish a local switch with the second terminal in the BSS, the solutions described in detail in the preceding embodiment that when a local switch of a speech path between a first terminal and a second terminal is established in a BSS, or after the local switch of the speech path between the first terminal and the second terminal is established in the BSS, the BSS is instructed to output a bypassing to the MSC to perform lawful interception about the speech path includes the following modes.

First mode: After the first terminal is handed over, when establishing the local switch of the speech path between the first terminal and the second terminal in the BSS, the MSC instructs the BSS to output a bypassing to the MSC to perform lawful interception about the speech path.

In this mode, a handover related message is first processed between the MSC and the BSS, and then a bypassing operation related message is processed when a local switch related message is processed.

Second mode: In the process of the handover of the first terminal, when establishing the local switch of the speech path between the first terminal and the second terminal in the BSS, the MSC instructs the BSS to output a bypassing to the MSC to perform lawful interception about the speech path.

In this mode, between the MSC and the BSS, the handover related message, the local switch related message, and the bypassing operation related message are combined together for being processed.

Third mode: After the first terminal is handed over, the MSC establishes the local switch of the speech path between the first terminal and the second terminal in the BSS, and then the MSC instructs the BSS to output a bypassing to the MSC to perform lawful interception about the speech path.

In this mode, a handover related message is first processed between the MSC and the BSS, then a local switch related message is processed, and finally, a bypassing operation related message is processed, where the processing of related messages are independent.

Fourth mode: In the process that the first terminal is handed over, the MSC establishes the local switch of the speech path between the first terminal and the second terminal in the BSS, and then the MSC instructs the BSS to output a bypassing to the MSC to perform lawful interception about the speech path.

In this mode, between the MSC and the BSS, the handover related message and the local switch related message are combined together for being processed, and then the bypassing operation related message is processed.

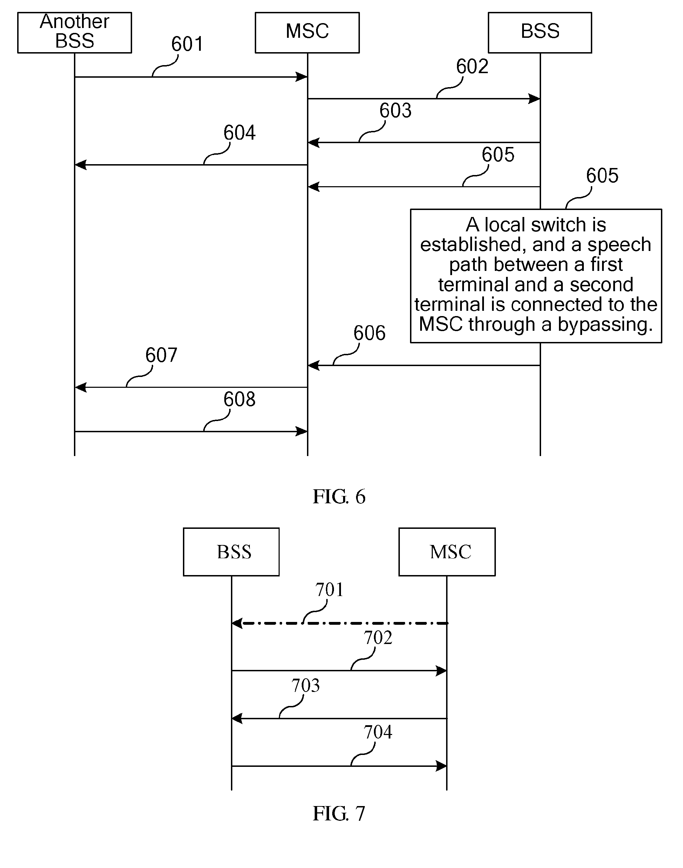

FIG. 6 is a signaling flow chart of further another embodiment of the method for lawful interception according to the present invention. This embodiment is implemented in the scenario as follows: a first terminal is handed over between BSSs, namely, the first terminal can establish a local switch with a second terminal in the BSS after the first terminal is handed over from another BSS to the BSS, that is, both the first terminal and the second terminal are in the BSS, and the condition for establishing the local switch between the first terminal and the second terminal in the BSS is met. In the scenario, as shown in FIG. 6, taking the preceding second mode as an example, in which, in the process that the first terminal is handed over, when the MSC establishes a local switch of the speech path between the first terminal and the second terminal in the BSS, the MSC instructs the BSS to output a bypassing to the MSC for lawful interception about the speech path, the method for lawful interception includes the following steps.

Step 601: Another BSS sends a handover requirement message to the MSC to request the MSC to hand over the first terminal from another BSS.

Step 602: The MSC selects from a cell list of the handover requirement message a target cell to which the first terminal is handed over, judges that the target cell belongs to the BSS and judges that the speech path between the first terminal and the second terminal meets the conditions for establishing the local switch, and determines that the first terminal and the second terminal need to establish the local switch and output a bypassing, and then the MSC sends a handover request message to the BSS, where the handover request message carries an indication of establishing the local switch of the speech path between the first terminal and the second terminal and instructing the BSS to perform bypassing operation.

The handover request message may further optionally carry endpoint resource information prepared by the MSC for the bypassing. The MSC receives the handover requirement message and receives a request that the interception system needs to perform lawful interception about two speech paths or one of the two speech paths between the first terminal and the second terminal, and then sends a handover request message carrying the indication of establishing the local switch of the speech path between the first terminal and the second terminal and instructing the BSS to perform bypassing operation.

Step 603: The BSS returns a handover request response message to the MSC, where the handover request response message carries a response to the indication of establishing the local switch of the speech path between the first terminal and the second terminal and instructing the BSS to perform bypassing operation.

The handover request response message may further optionally carry endpoint resource information prepared by the BSS for the bypassing.

Step 604: The MSC sends a handover command to another BSS.

Step 605: When the BSS detects that the first terminal has been handed over, the local switch of the speech path between the first terminal and the second terminal has been established and the speech path between the first terminal and the second terminal has been connected to the MSC.

Step 606: The BSS sends a handover completion message to the MSC, where the handover completion message carries a result of the establishment of the local switch of the speech path between the first terminal and the second terminal and a result of the bypassing operation performed by the BSS.

The handover completion message may further optionally carry endpoint resource information modified by the BSS for the bypassing.

Step 607: The MSC sends a clear command of the first terminal to another BSS.

Step 608: After the clearing, Another BSS returns a clear completion response message to the MSC.

Furthermore, in the scenario of this embodiment, if it is intended to perform lawful interception about the speech path between the first terminal and the second terminal, the MSC may finally determine that a local switch is not established on a call of the first terminal and a call of the second terminal and instruct the BSS to directly connect the speech path between the first terminal and the second terminal to the MSC, so that the speech path is looped by the MSC, and a bypassing is led out from the MSC for the interception system to perform the lawful interception.

In the method for lawful interception according to this embodiment, after the first terminal is handed over between the BSSs and is handed over from another BSS to the BSS, and a speech path is established between the first terminal and the second terminal in the BSS, the four modes described above may be adopted to perform lawful interception about the speech path between the two terminals. The method will not cause speech interruption on the speech path between the two terminals that has a local switch established, or may greatly shorten the time of the speech interruption, so that a user that is monitored cannot be easily aware that the speech path is monitored.

Furthermore, after the first terminal that has performed a session with the second terminal in the BSS and established the local switch is handed over from the BSS to another BSS, if the first terminal and the second terminal resided in the BSS do not meet the conditions for establishing the local switch, the method may further include the following steps.

Step 601': When the first terminal is handed over from the BSS to another BSS, the MSC instructs the BSS to release the local switch.

Step 602': When releasing the local switch, the BSS releases the bypassing that is established for connecting the speech path between the first terminal and the second terminal to the MSC, and directly connects the speech path of the second terminal in the BSS to the MSC.

Step 603': Another BSS re-connects the speech path of the first terminal that has been handed over in another BSS to the MSC.

Specifically, after receiving the handover requirement message sent by the BSS, the MSC determines that the first terminal handed over from the BSS and the second terminal resided in the BSS cannot maintain the local switch, that is, after handover, the user plane link of the first terminal and the second terminal must be looped in the MSC, and then the MSC initiates the operation of releasing the local switch between the first terminal and the second terminal. As for the first terminal, the speech path that has a local switch established in the BSS needs to be released, and the speech path to the MSC needs to be re-established in another BSS; and as for the second terminal that is still in the BSS, only the bypassing needs to be canceled, and the speech path of the local switch needs to be directly connected to the MSC.

Through step 601' to step 603', the speech path from the two terminals to the MSC may be re-established, so that the speech path between the two terminals may be looped in the MSC. Therefore, if the interception system needs to perform lawful interception on the terminals, the speech may be directly led out from the MSC for the lawful interception.

FIG. 7 is a signaling flow chart of still another embodiment of a method for lawful interception according to the present invention. This embodiment is implemented in the scenario as follows: a first terminal is handed over in a BSS where a second terminal is located, and can establish a local switch with the second terminal in the BSS. The handover in the BSS may be that the first terminal is handed over from one BTS to another BTS in the same BSS. The situations are not distinguished in the embodiments of the present invention and are generally referred to as the handover in the BSS. In the scenario, as shown in FIG. 7, the second mode is taken as an example, in which, in the process that the first terminal is handed over, when establishing a local switch of the speech path between the first terminal and the second terminal in the BSS, the MSC instructs the BSS to output a bypassing to the MSC for lawful interception about the speech path, the method for lawful interception includes the following steps.

Step 701: The MSC sends to the BSS an enquiry of performing an internal handover on the first terminal.

Step 701 is an optional step.

Step 702: The BSS sends an internal handover request message to the MSC.

Step 703: After receiving the internal handover request message sent by the BSS, the MSC sends an internal handover command to the BSS. If the MSC judges that the two terminals after handover meet the conditions for establishing the local switch of the speech path, the internal handover command carries an indication of establishing the local switch of the speech path between the first terminal and the second terminal and instructing the BSS to perform bypassing operation.

The internal handover command may optionally carry endpoint resource information prepared by the MSC for the bypassing.

Step 704: The BSS completes the establishment of the local switch of the speech path between the first terminal and the second terminal and connects the speech path between the first terminal and the second terminal to the MSC through the bypassing, and returns a handover completion response message to the MSC, where the handover completion response message carries a result of the establishment of the local switch between the first terminal and the second terminal and a result of the bypassing operation performed by the BSS.

The handover completion response message may further optionally carry endpoint resource information allocated by the BSS for the bypassing.

Furthermore, in the scenario of this embodiment, if it is intended to perform lawful interception about the speech path between the first terminal and the second terminal, the MSC may finally determine that a local switch is not established on a call of the first terminal and a call of the second terminal, that is, the internal handover command sent by the MSC to the BSS does not carry the indication of establishing the local switch of the speech path between the first terminal and the second terminal and instructing the BSS to perform the bypassing operation, so that after handover, the speech path is still looped in the MSC, and a bypassing is led out from the MSC for lawful interception.

According to the method for lawful interception according to this embodiment, after the first terminal is handed over in the BSS, and a speech path is established between the first terminal and the second terminal, the four modes described above may be adopted to perform lawful interception about the speech path between the two terminals. The method will not cause speech interruption on the speech path between the two terminals that has a local switch established, or may greatly shorten the time of the speech interruption, so that a user that is monitored cannot be easily aware that the speech path is monitored.

Furthermore, after the first terminal that has performed a session with the second terminal in the BSS and established the local switch is handed over in the BSS, if the first terminal and the second terminal in the BSS no longer meet the conditions for establishing the local switch, the method may further include the following steps.

Step 701': When the first terminal is handed over in the BSS, the MSC instructs the BSS to release the local switch through the internal handover command.

Step 702': When releasing the local switch, the BSS cancels the bypassing that is established for connecting the speech path between the first terminal and the second terminal to the MSC, and connects the speech path of the second terminal in the BSS to the MSC.

Step 703': The BSS connects the speech path of the first terminal that is handed over in the BSS to the MSC.

Specifically, after receiving the internal handover request message sent by the BSS, the MSC judges that the local switch of the first terminal and the second terminal in the BSS cannot be maintained, that is, after the handover, the user plane links of the first terminal and the second terminal must be looped in the MSC, and then the MSC initiates the operation of releasing the local switch between the first terminal and the second terminal.

Through step 701' to step 703', the speech path from the two terminals to the MSC may be re-established, so that the speech path between the two terminals can be looped in the MSC. Therefore, if the interception system needs to perform lawful interception on the terminals, the speech may be directly led out from the MSC for the lawful interception.

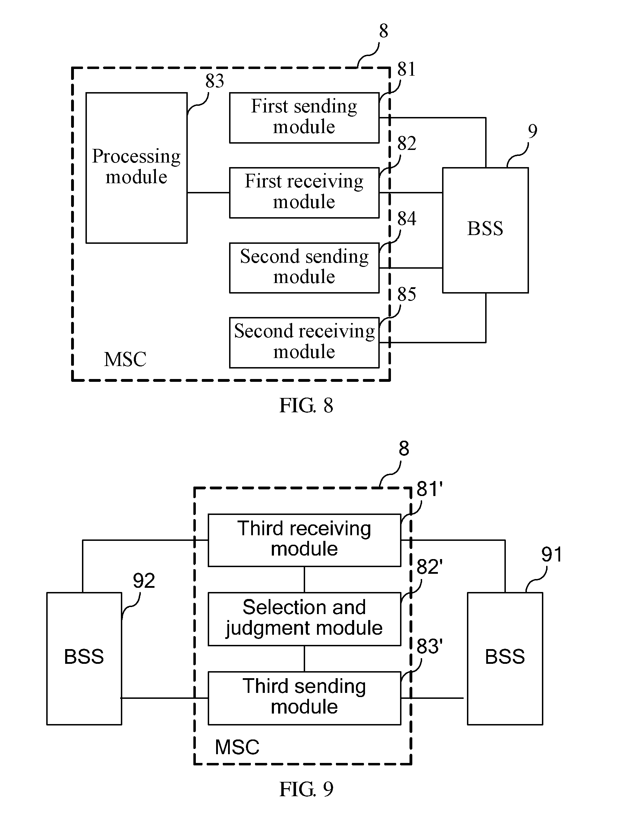

FIG. 8 is a schematic structural diagram of an embodiment of an MSC for lawful interception according to the present invention. As shown in FIG 8, an MSC 8 is configured to instruct a BSS 9 to output a bypassing to the MSC 8 to perform lawful interception about a speech path, when a local switch of the speech path between a first terminal and a second terminal is established in the BSS 9 or after the local switch of the speech path between the first terminal and the second terminal is established in the BSS 9. The MSC 8 specifically includes a first sending module 81, a first receiving module 82, and a processing module 83. The first sending module 81 is configured to send to the BSS 9 a command of establishing a local switch of the speech path between the first terminal and the second terminal and/or a command of performing bypassing operation on the speech path in the local switch. The first receiving module 82 is configured to receive a corresponding local switch completion response message and/or bypassing operation completion response message returned by the BSS9 after the BSS9 completes establishment of the local switch and/or outputs the bypassing of the speech path of the established local switch to the MSC 8. The processing module 83 is configured to lead out a bypassing connected to the MSC to perform lawful interception about the speech path after a local switch and bypassing operation completion response message or a bypassing operation completion response message returned by the BSS is received.

Furthermore, the MSC 8 may further include a second sending module 84 and a second receiving module 85. The second sending module 84 is configured to send a bypassing release operation command to the BSS 9. The second receiving module 85 is configured to receive a bypassing release completion message returned by the BSS 9 after the BSS 9 releases, according to the bypassing release operation command, the bypassing connected to the MSC 8.

In the MSC provided in this embodiment, messages sent and received by the first sending module and the first receiving module may be sent in time sequence in different messages, or may be combined into the same message and sent at the same time. The specific description of the solution may be obtained with reference to the descriptions in the embodiments of the method for lawful interception, which will not be repeated herein.

In the MSC provided in this embodiment, through the bypassing operation, the speech path between the two terminals is connected to the MSC from the BSS, so that the bypassing is led out from the MSC for the interception system to perform lawful interception. The method will not cause speech interruption on the speech path between the two terminals that has a local switch established, or may greatly shorten the time of the speech interruption, so that a user that is monitored cannot be easily aware that the speech path is monitored.

FIG. 9 is a schematic structural diagram of another embodiment of an MSC for lawful interception according to the present invention. As shown in FIG. 9, if a first terminal can establish a local switch with a second terminal in a BSS 92 when the first terminal is handed over from another BSS 91 to the BSS 92, an MSC 8 may specifically include a third receiving module 81', a selection and judgment module 82', and a third sending module 83'. The third receiving module 81' is configured to receive a handover requirement message sent by another BSS 91, so as to request the MSC 8 to hand over the first terminal from another BSS 91; receive a handover request response message returned by the BSS 92, where the handover request response message carries a response to an indication of establishing the local switch of the speech path between the first terminal and the second terminal and instructing the BSS 92 to perform bypassing operation; and receive a handover completion message returned by the BSS 92 after the BSS 92 completes the handover of the first terminal, the establishment of the local switch, and the bypassing operation, where the handover completion message carries a result of the establishment of the local switch and a result of the bypassing operation. The selection and judgment module 82' is configured to select from a cell list of the handover requirement message a target cell to which the first terminal is to be handed over, judge that the target cell belongs to the BSS 92 and judge that speech path between the first terminal and the second terminal meets the conditions for establishing the local switch, and determine whether the first terminal and the second terminal need to establish a local switch and output a bypassing. The third sending module 83' is configured to send a handover request message to the BSS 92, where the handover request message carries the indication of establishing the local switch of the speech path between the first terminal and the second terminal and instructing the BSS 92 to perform the bypassing operation; and send a handover command to another BSS 91.

In the MSC provided in this embodiment, the technical solution of implementing lawful interception on the terminal by the interception system when the first terminal that is handed over from another BSS to the BSS can establish the local switch with the second terminal in the BSS is described. The handover, the local switch, and the bypassing operation may be sent in time sequence in different messages, or may be combined into the same message and sent at the same time. The specific description of the solution may be obtained with reference to the descriptions in the embodiments of the method for lawful interception, which will not be repeated herein.

In the MSC provided in this embodiment, through the bypassing operation, the speech path between the two terminals is connected to the MSC from the BSS, so that the bypassing is led out from the MSC for the interception system to perform lawful interception. The method will not cause speech interruption on the speech path between the two terminals that has a local switch established, or may greatly shorten the time of the speech interruption, so that a user that is monitored cannot be easily aware that the speech path is monitored.

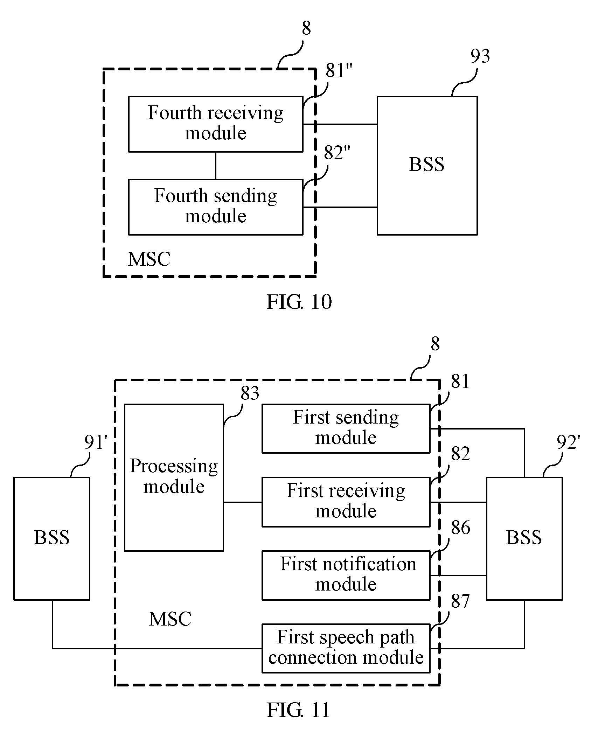

FIG. 10 is a schematic structural diagram of further another embodiment of an MSC for lawful interception according to the present invention. As shown in FIG. 10, if a first terminal can establish the local switch with a second terminal in a BSS 93 when the first terminal is handed over in the BSS 93 where the second terminal is located, an MSC 8 may specifically include a fourth receiving module 81" and a fourth sending module 82". The fourth receiving module 81" is configured to receive an internal handover request message sent by the BSS 93, receive a handover completion response message returned by the BSS 93 after the BSS 93 completes the handover of the first terminal, the establishment of the local switch, and the bypassing operation, where the handover completion response message carries a result of the establishment of the local switch and a result of the bypassing operation. The fourth sending module 82" is configured to send an internal handover command to the BSS 93 after the internal handover request message received by the fourth receiving module 81" is received, where the internal handover command carries an indication of establishing the local switch of the speech path between the first terminal and the second terminal and instructing the BSS 93 to perform the bypassing operation.

In the MSC provided in this embodiment, the technical solution of implementing lawful interception on the terminal by the interception system when the first terminal that is handed over in the BSS 93 can establish the local switch with the second terminal in the BSS 93 is described. The handover, the local switch, and the bypassing operation may be sent in time sequence in different messages, or may be combined into the same message and sent at the same time. The specific description of the solution may be obtained with reference to the descriptions in the embodiments of the method for lawful interception, which will not be repeated herein.

In the MSC provided in this embodiment, through the bypassing operation, the speech path between the two terminals is connected to the MSC from the BSS, so that the bypassing is led out from the MSC for the interception system to perform lawful interception. The method will not cause speech interruption on the speech path between the two terminals that has a local switch established, or may greatly shorten the time of the speech interruption, so that a user that is monitored cannot be easily aware that the speech path is monitored.

Furthermore, in the embodiments of the present invention, the situation that the two terminals after handover cannot meet the conditions for establishing the local switch is further included.

FIG. 11 is a schematic structural diagram of still another embodiment of an MSC for lawful interception according to the present invention. After a first terminal that has performed a session with a second terminal in the BSS 92' and established a local switch is handed over from the BSS 92' to another BSS 91', if the first terminal and the second terminal resided in the BSS 92' do not meet the conditions for establishing the local switch, then as shown in the FIG. 11, an MSC 8 may further include a first notification module 86 and a first speech path connection module 87, in addition to the first sending module 81, the first receiving module 82, and the processing module 83 as shown in FIG. 8. The first notification module 86 is configured to instruct the BSS 92' to release the local switch. The first speech path connection module 87 is configured to connect the speech path between the first terminal and the second terminal to the MSC 8 after the local switch is released, so that the speech path between the first terminal and the second terminal can be led out for performing lawful interception about the speech path.

Through the first notification module and the first speech path connection module, the speech path from the two terminals to the MSC may be re-established, so that the speech path between the two terminals may be looped in the MSC. Therefore, if the interception system needs to perform lawful interception on the terminals, the speech may be directly led out from the MSC for the lawful interception.

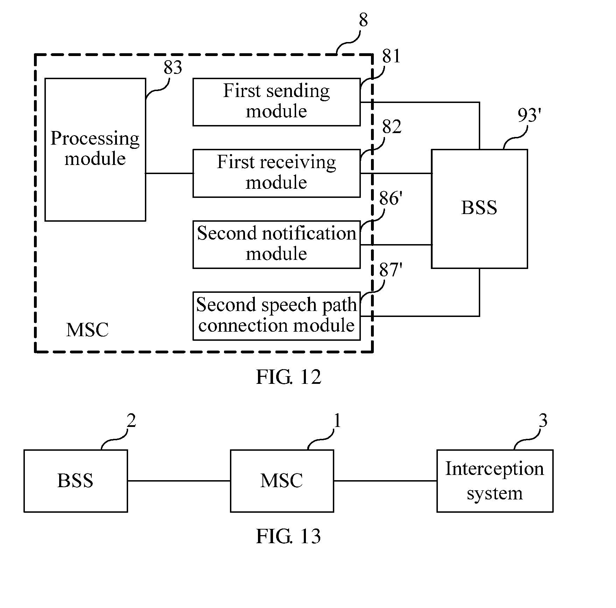

FIG. 12 is a schematic structural diagram of still another embodiment of an MSC for lawful interception according to the present invention. After a first terminal that has performed a session with a second terminal in the BSS 92' and established a local switch is handed over in a BSS 93', if the first terminal and the second terminal resided in the BSS 92' do not meet the conditions for establishing the local switch, then as shown in the FIG. 12, the MSC 8 may further include a second notification module 86' and a second speech path connection module 87', in addition to the first sending module 81, the first receiving module 82, and the processing module 83 as shown in FIG. 8. The second notification module 86' is configured to instruct the BSS 93' to release the local switch. The second speech path connection module 87' is configured to connect the speech path between the first terminal and the second terminal to the MSC 8 after the local switch is released, so that the speech path between the first terminal and the second terminal can be led out for performing lawful interception about the speech path.

Through the second notification module and the second speech path connection module, the speech path from the two terminals to the MSC may be re-established, so that the speech path between the two terminals may be looped in the MSC. Therefore, if the interception system needs to perform lawful interception on the terminals, the speech may be directly led out from the MSC for the lawful interception.

FIG. 13 is a schematic structural diagram of an embodiment of a system for lawful interception according to the present invention. As shown in FIG. 13, the system includes an MSC 1, a BSS 2, and an interception system 3. The MSC 1 is configured to instruct the BSS 2 to output a bypassing to the MSC 1 when a local switch of a speech path between a first terminal and a second terminal is established in the BSS 2 or after the local switch of the speech path between the first terminal and the second terminal is established in the BSS 2. The BSS 2 is configured to perform bypassing operation and output a bypassing to the MSC 1, so as to connect the speech path established between the terminals to the MSC 1. The MSC 1 is further configured to lead out speech from the speech path connected to the MSC 1 to the interception system 3. The interception system 3 is configured to perform lawful interception about the speech path through the speech led out from the MSC 1.

In the system for lawful interception provided in this embodiment, through the bypassing operation, the speech path between the two terminals is connected to the MSC from the BSS, so that the bypassing may be led out from the MSC for the interception system to perform lawful interception. The method will not cause speech interruption on the speech path between the two terminals that has a local switch established, or may greatly shorten the time of the speech interruption, so that a user that is monitored cannot be easily aware that the speech path is monitored.

The technical solutions of the method and the system for lawful interception provided in the embodiments of the present invention may be applicable in communication systems such as the global system of mobile communication system (GSM), the code division multiple access communication system (CDMA), and the wideband code division multiple access communication system (WCDMA).

Persons of ordinary skill in the art should understand that all or a part of the steps of the preceding methods according to the embodiments may be implemented by a program instructing relevant hardware. The program may be stored in a computer readable storage medium. When the program is executed, the steps of the preceding methods according to the embodiments are included. The storage medium may be a magnetic disk, an optical disk, a read-only memory (Read-Only Memory, ROM), or a random access memory (Random Access Memory, RAM).

Finally, it should be noted that the above embodiments are merely used for describing the technical solutions of the present invention, but are not intended to limit the present invention. Although the present invention is described in detail with reference to the preceding embodiments, it should be understood by persons of ordinary skill in the art that, modifications may still be made to the technical solutions described in the preceding embodiments, or equivalent replacements may be made to some technical features in the technical solutions, as long as such modifications or replacements do not depart from the spirit and scope of the technical solutions of the embodiments of the present invention.

## Claims

1. A method for lawful interception, **characterized by** comprising:
when a local switch of a speech path between a first terminal and a second terminal is established in a base station sub-system, BSS, or after the local switch of the speech path between the first terminal and the second terminal is established in the BSS, instructing the BSS to output a bypassing to a mobile switch center, MSC, to perform lawful interception about the speech path.

2. The method for lawful interception according to claim 1, wherein when the local switch of the speech path between the first terminal and the second terminal is established in the BSS, the instructing the BSS to output the bypassing to the MSC to perform lawful interception about the speech path comprises:
sending, by the MSC, to the BSS a command of establishing a local switch of a speech path between the first terminal and the second terminal and performing bypassing operation on the speech path in the local switch;
receiving, by the MSC, a local switch and bypassing operation completion response message returned by the BSS, after the BSS completes the establishment of the local switch and outputs the bypassing of the speech path of the established local switch to the MSC; and
leading out, by the MSC, the bypassing connected to the MSC to perform lawful interception about the speech path, after the MSC receives the local switch and bypassing operation completion response message.

3. The method for lawful interception according to claim 1, wherein after the local switch of the speech path between the first terminal and the second terminal is established in the BSS, the instructing the BSS to output the bypassing to the MSC to perform lawful interception about the speech path comprises:
sending, by the MSC, to the BSS a command of establishing the local switch of the speech path between the first terminal and the second terminal;
receiving, by the MSC, a local switch completion response message returned by the BSS after the BSS completes the establishment of the local switch;
sending, by the MSC, to the BSS a command of performing bypassing operation on the speech path of the established local switch, after the MSC receives the local switch completion response message;
receiving, by the MSC, a bypassing operation completion response message returned by the BSS after the BSS outputs the bypassing of the speech path of the established local switch to the MSC; and
leading out, by the MSC, the bypassing connected to the MSC to perform lawful interception about the speech path after the MSC receives the bypassing operation completion response message.

4. The method for lawful interception according to claim 1, 2, or 3, wherein after performing lawful interception about the speech path, the method further comprises:
sending, by the MSC, a bypassing release operation command to the BSS; and
receiving, by the MSC, a bypassing release completion message returned by the BSS, after the BSS releases, according to the bypassing release operation command, the bypassing connected to the MSC.

5. The method for lawful interception according to claim 1, wherein if the first terminal after handover is capable of establishing a local switch with the second terminal in the BSS, when the local switch of the speech path between the first terminal and the second terminal is established in the BSS, or after the local switch of the speech path between the first terminal and the second terminal is established in the BSS, the instructing the BSS to output the bypassing to the MSC to perform lawful interception about the speech path comprises:
after the first terminal is handed over, when the MSC establishes the local switch of the speech path between the first terminal and the second terminal in the BSS, instructing the BSS to output a bypassing to the MSC to perform lawful interception about the speech path; or
in the process that the first terminal is handed over, when the MSC establishes the local switch of the speech path between the first terminal and the second terminal in the BSS, instructing the BSS to output a bypassing to the MSC to perform lawful interception about the speech path; or
after the first terminal is handed over, first establishing, by the MSC, the local switch of the speech path between the first terminal and the second terminal in the BSS, and then instructing, by the MSC, the BSS to output a bypassing to the MSC to perform lawful interception about the speech path; or
in the process that the first terminal is handed over, first establishing, by the MSC, the local switch of the speech path between the first terminal and the second terminal in the BSS, and then instructing, by the MSC, the BSS to output a bypassing to the MSC to perform lawful interception about the speech path.

6. The method for lawful interception according to claim 5, wherein the handover of the first terminal comprises inter-BSS handover and intra-BSS handover,
the inter-BSS handover is that the first terminal is handed over from another BSS to the BSS where the second terminal is located; and
the intra-BSS handover is that the first terminal is handed over in the BSS, and the first terminal and the second terminal are in the same BSS.

7. The method for lawful interception according to claim 6, wherein when the first terminal is handed over between the BSSs, in the process that the first terminal is handed over, and when the MSC establishes the local switch of the speech path between the first terminal and the second terminal in the BSS, the instructing the BSS to output the bypassing to the MSC to perform lawful interception about the speech path comprises:
sending, by the MSC, a handover request message to the BSS after the MSC receives a handover requirement message sent by another BSS, wherein the handover request message carries an indication of establishing the local switch of the speech path between the first terminal and the second terminal and instructing the BSS to perform bypassing operation;
sending, by the MSC, a handover command to another BSS after the MSC receives a handover request response message returned by the BSS, wherein the handover request response message carries the indication of establishing the local switch of the speech path between the first terminal and the second terminal and instructing the BSS to perform bypassing operation; and
receiving, by the MSC, a handover completion message returned by the BSS after the BSS completes handover of the first terminal, establishment of the local switch, and the bypassing operation, wherein the handover completion message carries a result of the establishment of the local switch and a result of the bypassing operation.

8. The method for lawful interception according to claim 6, wherein when the first terminal is handed over in the BSS, in the process that the first terminal is handed over, and when the MSC establishes the local switch of the speech path between the first terminal and the second terminal in the BSS, the instructing the BSS to output the bypassing to the MSC to perform lawful interception about the speech path comprises:
sending, by the MSC, an internal handover command to the BSS after the MSC receives an internal handover request message sent by the BSS, wherein the internal handover command carries an indication of establishing the local switch of the speech path between the first terminal and the second terminal and instructing the BSS to perform bypassing operation; and
receiving, by the MSC, a handover completion response message returned by the BSS after the BSS completes handover of the first terminal, establishment of the local switch, and the bypassing operation, wherein the handover completion response message carries a result of the establishment of the local switch and a result of the bypassing operation.

9. The method for lawful interception according to claim 1, wherein if the first terminal does not meet conditions for establishing the local switch with the second terminal in the BSS, the method further comprises:
instructing, by the MSC, the BSS to release the local switch; and
connecting, by the MSC, the speech path between the first terminal and the second terminal to the MSC after the local switch is released.

10. A mobile switch center, MSC, for lawful interception, **characterized in that** the MSC is configured to instruct a base station sub-system, BSS, to output a bypassing to the MSC to perform lawful interception about a speech path, when a local switch of the speech path between a first terminal and a second terminal is established in the BSS or after the local switch of the speech path between the first terminal and the second terminal is established in the BSS.

11. The MSC for lawful interception according to claim 10, comprising:
a first sending module, configured to send to the BSS a command of establishing the local switch of the speech path between the first terminal and the second terminal and/or a command of performing bypassing operation on the speech path in the local switch;
a first receiving module, configured to receive a corresponding local switch completion response message returned by the BSS after the BSS completes establishment of the local switch and/or a bypassing operation complete response message returned by the BSS after the BSS outputs the bypassing of the speech path of the established local switch to the MSC; and
a processing module, configured to lead out the bypassing connected to the MSC to perform lawful interception about the speech path.

12. The MSC for lawful interception according to claim 10 or 11, further comprising:
a second sending module, configured to send a bypassing release operation command to the BSS; and
a second receiving module, configured to receive a bypassing release completion message returned by the BSS, after the BSS releases, according to the bypassing release operation command, the bypassing connected to the MSC.

13. The MSC for lawful interception according to claim 10, wherein if the first terminal is capable of establishing a local switch with the second terminal in the BSS when the first terminal is handed over from another BSS to the BSS, the MSC comprises:
a third receiving module, configured to receive a handover requirement message sent by another BSS; receive a handover request response message returned by the BSS, wherein the handover request response message carries a response to an indication of establishing the local switch of the speech path between the first terminal and the second terminal and instructing the BSS to perform bypassing operation; and receive a handover completion message returned by the BSS after the BSS completes handover of the first terminal, establishment of the local switch, and the bypassing operation, wherein the handover completion message carries a result of the establishment of the local switch and a result of the bypassing operation;
a selection and judgment module, configured to select from a cell list of the handover requirement message a target cell to which the first terminal is to be handed over, judge that the target cell belongs to the BSS and judge that the speech path between the first terminal and the second terminal meets conditions for the establishment of the local switch, and determine whether the first terminal and the second terminal need to establish the local switch and output the bypassing; and
a third sending module, configured to send a handover request message to the BSS, wherein the handover request message carries the indication of establishing the local switch of the speech path between the first terminal and the second terminal and instructing the BSS to perform bypassing operation; and send a handover command to another BSS.

14. The MSC for lawful interception according to claim 10, wherein if the first terminal is capable of establishing the local switch with the second terminal in the BSS when the first terminal is handed over within the BSS where the second terminal is located, the MSC comprises:
a fourth receiving module, configured to receive an internal handover request message sent by the BSS; receive a handover completion response message returned by the BSS after the BSS completes handover of the first terminal, establishment of the local switch, and the bypassing operation, wherein the handover completion response message carries a result of the establishment of the local switch and a result of the bypassing operation; and
a fourth sending module, configured to send an internal handover command to the BSS after receiving the internal handover request message received by the fourth receiving module, wherein the internal handover command carries an indication of establishing the local switch of the speech path between the first terminal and the second terminal and instructing the BSS to perform the bypassing operation.

15. The MSC for lawful interception according to claim 11, wherein if the first terminal after handover does not meet conditions for establishing the local switch with the second terminal in the BSS, the MSC further comprises:
a notification module, configured to instruct the BSS to release the local switch; and
a speech path connection module, configured to connect the speech path between the first terminal and the second terminal to the MSC after the local switch is released.

16. A system for lawful interception, comprising a mobile switch center, MSC, a base station sub-system, BSS, and an interception system, **characterized by** comprising,
the MSC is configured to instruct the BSS to output a bypassing to the MSC when a local switch of a speech path between a first terminal and a second terminal is established in the BSS or after the local switch of the speech path between the first terminal and the second terminal is established in the BSS;
the BSS is configured to perform bypassing operation, output the bypassing to the MSC, so as to connect the speech path established between the terminals to the MSC;
the MSC is further configured to lead out a speech from the bypassing connected to the MSC to the interception system; and
the interception system is configured to perform lawful interception about the speech path through the speech led out from the MSC.
